# EUROPEAN PATENT APPLICATION

(11) **EP 2 270 693 A1**
(43) Date of publication of application: **05.01.2011**
(21) Application number: 08761482.2
(22) Date of filing: 11.04.2008
(51) Int. Cl.: G06F 17/30

(54) **METHOD FOR ACCESSING A STORAGE SYSTEM WITH MULTIPLE FILE SYSTEMS**

(71) Applicant: Microelectronica Española, S.A.U., 28002 Madrid (ES)
(72) Inventor: CAÑIS ROBLES, Javier, E-28522 Madrid (ES); CORTES SAINZ, Javier Alfonso, E-28031 Madrid (ES); ALTAY, Ahmet, Mountain View California 94040-2210 (US)
(74) Representative: Carpintero Lopez, Francisco
(86) International application number: PCT/ES2008/000235
(87) International publication number: WO 2009/125027

(57) **Abstract**

In order for an embedded application to write data to an embedded storage system accessible with host and embedded file systems, an embedded storage manager receives a file data write request. The manager determines if the request will change an index of the storage system contents. If so, the host file system is used to write the file. Alternatively, the file is opened and extended with the host file system. The file is then opened and written to by the embedded file system. The file is truncated by the host file system, and closed by both file systems. If not, the file is opened, written, and closed by the embedded file system. In order for an embedded application to read data from an embedded storage system, the embedded file system's cached storage system index is updated, then the file is opened, read, and closed by the embedded file system.

## Description

### TECHNICAL FIELD

This application relates generally to the operation of non-volatile flash memory systems, and, more specifically, to a method and system for accessing a storage system with multiple file systems.

### BACKGROUND

There are many commercially successful non-volatile memory products being used today, particularly in the form of small form factor cards, which employ flash EEPROM (Electrically Erasable and Programmable Read Only Memory) cells formed on one or more integrated circuit devices. Some of the commercially available card formats include CompactFlash (CF) cards, MultiMedia cards (MMC), and Secure Digital (SD) cards. Other commercially available card formats include Smart Cards, Subscriber Identity Module (SIM), and Removable User Identity Module (R-UIM) cards. Hosts include personal computers, notebook computers, personal digital assistants (PDAs), various data communication devices, digital cameras, cellular telephones, portable audio players, automobile sound systems, and similar types of equipment. In some systems, a removable card includes a controller to direct operation of the memory in the card. Thus, control of the memory may be achieved by software or hardware on a controller in the card. Besides a memory card implementation, this type of memory can alternatively be embedded into various types of host systems. In both removable and embedded applications, host data may be stored in the memory according to a storage scheme implemented by memory control software.

The memory control software may interface with a host file system, which, in turn, may interface with a memory file manager which provides an application programming interface (API) to applications accessing the memory. Host file systems may support a set of read and write commands to access storage systems connected to the host, may be optimized for the resource limitations or features of the host, and may include advanced features such as multi-thread support.

Some non-volatile memory cards contain an embedded processor that may generate data to store within the memory in the card. The embedded processor or the host may retrieve the data generated by the embedded processor. Similarly, the embedded processor may also access data stored by the host in the memory. In these situations, the embedded processor shares the memory with the host, and utilizes a separate, additional file system, interfaced with the memory control software, to manage its data storage and retrieval. Synchronization between the host and memory card file systems is necessary when a host file system and an embedded processor file system are operated in parallel with one another to control shared access to a memory within a non-volatile memory card.

### SUMMARY

In order to address these issues, there is a need to improve coordinated access to a storage system by two separate file systems. Specifically, there is a need to improve coordinated access to a memory within a non-volatile memory card shared by a host and an embedded processor within the card. Various embodiments are designed to address these needs, examples of which are provided herein.

Thus, according to one aspect of the invention, a method is provided for managing data access to a storage system indexed by a storage system index. An access request is received from within the storage system, where the access request is associated with a file. Whether the access request is a write request that requires an update to the storage system index is determined. If the access request is a write request that requires an update to the storage system index, a data write command and the corresponding write data is transmitted to a host. A logical block address write command and at least a portion of the data is received from the host. A portion of the data is written to the storage system according to the logical block address write command. A storage system index update command is received from the host. The storage system index is updated according to the received storage system index update command. If the access request is a write request, including data, that does not require an update to the storage system index, the data is written to the file with an embedded file system. If the access request is a read request, data is read from the file with the embedded file system.

In another aspect of the invention, there is a storage system indexed by a storage system index. The storage system includes a memory, an embedded file system, and a memory controller that receives write and read requests from a host and the embedded file system and writes data to and reads data from the memory. The storage system also includes a manager that receives an access request from within the storage system, where the access request is associated with a file, and determines if the access request is a write request that requires an update to the storage system index, a write request that does not requires an update to the storage system index, or a read request. If the access request is a write request that would require an update to the storage system index, the manager transmits a data write command and the data to a host. If the access request is a write request that would not require an update to the storage system index, the manager writes data to the file with the embedded file system. If the access request is a read request, the manager reads data from the file with the embedded file system.

According to another aspect of the invention, there is a method of managing data access to a storage system indexed by a storage system index. An access request associated with a file is received from within the storage system. Whether the access request is a write request is determined.
If the access request is a write request, where the write request contains data, an open file command and a file extend command are transmitted to a host. A storage system index update command is received from the host, where the storage system index update command contains information about the extended file. The storage system index is updated according to the received storage system index update command. A close file command is transmitted to the host, and the embedded file system opens the file, writes the data to be stored, and closes the file. Whether the access request is a read request is determined. If the access request is a read request, the file is opened with an embedded file system, the data is read from the opened file using the embedded file system, and the file is closed using the embedded file system.

In yet another aspect of the invention, there is a storage system indexed by a storage system index. The storage system includes a memory, an embedded file system, and a memory controller that receives requests from a host and an embedded file system and writes data to and reads data from the memory. The storage system also includes a manager that receives an access request from within the storage system, wherein the access request is associated with a file, and determines if the access request is a write request, where the write request contains data. If the access request is a write request, the manager transmits an open file command to a host, transmits a file extend command to the host, and transmits a storage system index cache flush command to the host. The manager also opens the file with the embedded file system, writes data with the embedded file system, closes the file with the embedded file system, and transmits a close file command to the host, where the write of the data to the file using the embedded file system does not change the size of the file. The manager also determines if the access is a read request. If the access request is a read request, the manager opens the file with the embedded file system, reads data from the file with the embedded file system, and closes the file with the embedded file system.

Other methods and systems, and features and advantages thereof will be, or will become, apparent to one with skill in the art upon examination of the following figures and detailed description. It is intended that the scope of the invention will include the foregoing and all such additional methods and systems, and features and advantages thereof.

### BRIEF DESCRIPTION OF THE DRAWINGS

The components in the figures are not necessarily to scale, emphasis instead being placed upon illustrating various aspects thereof. Moreover, in the figures, like referenced numerals designate corresponding parts throughout the different views.

Figure 1 is a diagram illustrating a system for accessing a storage system utilizing two file systems in parallel.

Figure 2 shows exemplary steps for processing a write request received by the mass storage manager of Figure 1.

Figure 3 shows exemplary steps for processing a write operation using the host file system of Figure 1.

Figure 4 shows exemplary steps for using an embedded file system to perform read and write operations with assistance from a host file system.

Figure 5 shows exemplary steps for processing a write operation using the host file system of Figure 1.

### DETAILED DESCRIPTION OF THE PRESENTLY PREFERRED EMBODIMENTS

Applications in an exemplary system may need to write data to a storage system, and read data from a storage system. In many cases, a host file system on a host provides the necessary Application Programming Interface (API) to perform all of the required operations, such as opening a file, reading file data, writing file data, and closing a file. One example of a file system API is the Win32 File I/O API, provided by Microsoft Corporation. The Win32 API supports a variety of read and write functions for reading and writing a file on a storage system.

Some storage systems, such as removable non-volatile memory cards, contain an embedded processor. The embedded processor may perform a variety of operations, such as performing calculations or executing software programs or subroutines in response to requests from the host in communication with the storage system. The embedded processor may also execute subroutines, or programs without any request from or control by the host. One example of such a program is a subroutine to maintain the data stored in a non-volatile memory.

The applications running on an embedded processor may also generate data that may be stored within the non-volatile memory card, and may access data stored in a non-volatile memory card. These applications may access this storage through a file system running within the embedded processor's operating system.

In some systems, the data storage space accessible by applications running on the embedded processor is logically or physically separate from the data storage space accessible by the host. A physically separate data storage space may require the implementation of two or more physical memory arrays within the storage system. A logically separate data storage space may utilize two or more data partitions within a common memory. In these systems, the host file system and the embedded processor file system operate independently of each other, and coordination between the two file systems may not be required.

However, for some applications, it may be desirable for the host and the embedded processor to share access to the same data. In this situation, the shared data is stored on the same physical memory or same logical partition within the storage system. Host applications or embedded processor applications may read, write, and modify shared data. Therefore, in such a system, two file systems, a host file system, and an embedded file system, may provide access to the same data space. The operations of both file systems must be coordinated in order to maintain the integrity of the shared data and the storage system.

There are several architectures that may be utilized in a system where two file systems share access to a common storage system.

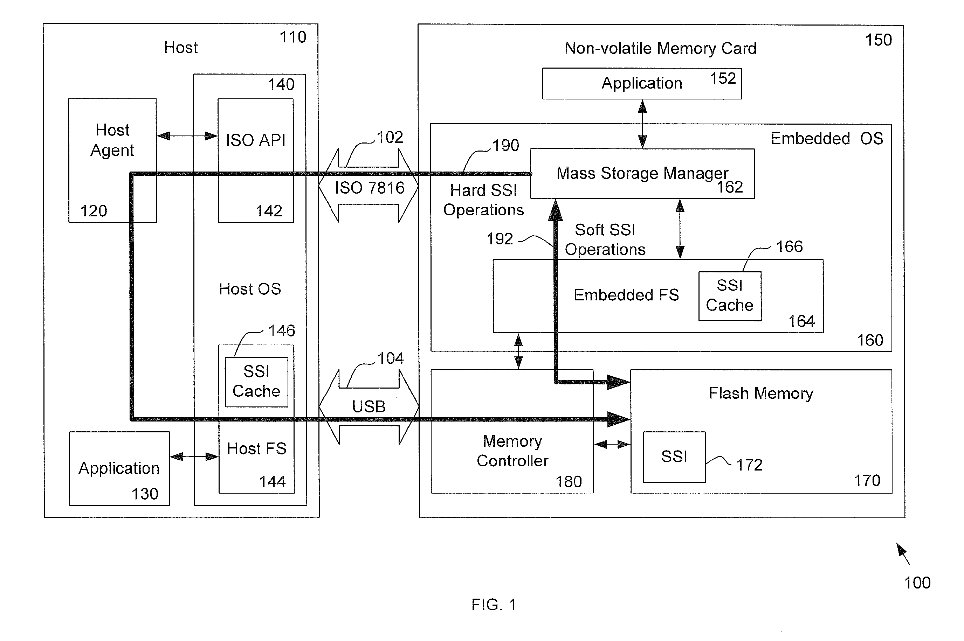

Figure 1 is a diagram illustrating a system 100 for accessing a storage system utilizing two file systems in parallel. The system 100 comprises a storage system 150 and a host 110. The storage system and host may be implemented in hardware, software, or a combination or hardware and software.

In one embodiment, the storage system 150 includes a plurality of embedded applications 152 and an embedded operating system 160 running on a processor in the storage system 150, a memory controller 180, and a memory 170. The data contained in the storage system 150 is stored in the memory 170, and the memory 170 is organized by a storage system index 172. In one embodiment, the volume file system used by the memory 170 is a FAT12, FAT16, or FAT32 system, and the storage system index 172 includes a file allocation table (FAT). In this embodiment, the storage system index 172 also includes additional information required to operate and maintain the storage system 140. This information may be stored outside of the file allocation table, and includes information such as directory information, file sizes, file creation and update dates, file and directory names, and file and directory attributes. Other embodiments may utilize other volume file system formats and their corresponding storage system indexes.

The embedded operating system 160 includes a mass storage manager 162 and an embedded file system 164. The embedded applications 152 may write and read data in the memory 170 by sending a request, such as a function call, to the mass storage manager 162. The mass storage manager 162 receives requests from an embedded application 152 to write or read data in the memory 170, and may generate file-level requests of the embedded file system 164. The file-level requests may be in the form of function calls to functions supported by the application programming interface (API) of the embedded file system 164, or may be commands transmitted through a hardware interface between the mass storage manager 162 and the embedded file system 164. The embedded file system 164 may accept file-level commands, and generate logical block address (LBA) commands sent to the memory controller 180 to access the memory 170. The memory controller 180 may receive memory access requests in the form of logical block address commands, and may perform logical block address to physical block address translation, where the physical block address is the physical address of the storage location within the memory 170 where data is written to or read from. Once the translation is complete, the memory controller 180 utilizes the physical block address to perform a read or write access to the memory 170.

The mass storage manager 162 may be implemented in hardware, firmware, software, or any combination thereof, arranged to implement the functionality of a mass storage manager, such as the functionality described in the embodiments of Figures 1, 2, and 4, and the accompanying text. In one embodiment, the mass storage manager 162 is implemented utilizing a processor within the storage system 150 configured with processor executable instructions. The processor executable instructions may be stored in random access memory (RAM) within the storage system 150, or non-volatile memory, such as a read-only memory (ROM), EEPROM (Electrically Erasable and Programmable Read Only Memory), E-flash (embedded flash), or the memory 170 within the storage system 150.

In one embodiment, the storage system 150 may be a solid-state disk drive, or a magnetic disk drive, sometimes referred to as a hard disk drive. In another embodiment, the storage system 150 may be a non-volatile memory such as a small form factor card. In one embodiment, the host 110 and the storage system 150 are contained within the same physical enclosure, and the storage system 150 is not removable from the system 100. In another embodiment, the storage system 150 is a removable media, such as a small form factor non-volatile memory card, and may be connected to and removed from the system 100.

Hardware, firmware, software, or any combination thereof may be utilized to implement the functionality of the memory controller 180. In one embodiment, the memory controller 180 is implemented utilizing a processor within the storage system 150 configured with processor executable instructions. The processor executable instructions may be stored in random access memory (RAM) within the storage system 150, or non-volatile memory, such as a read-only memory (ROM), EEPROM (Electrically Erasable and Programmable Read Only Memory), E-flash (embedded flash), or the memory 170 within the storage system 150. The memory controller 180 may receive requests to access a memory 170. In one embodiment, the memory controller 180 receives commands to read data from or write data to a memory 170, where the memory is addressed utilizing logical block address (LBA) commands. The memory controller 180 may receive commands from the host, over the USB communication interface 104, or from the embedded file system 164. The memory controller 180 may translate the logical block address in the command to a physical address in the memory 170 where the data is to be stored to or read from. The memory controller 180 then utilizes the physical block address and the remainder of the command to access the memory 170. The specific functional requirements of the memory controller 180 may be defined by the type of memory 170 being accessed.

The storage system 150 may be in communication with the host 110 over one or more communication interfaces 102, 104. In one embodiment, two communication interfaces are utilized to transmit commands and data between the host 110 and the storage system 150. In one embodiment utilizing two communication interfaces, a first communication interface between the storage system 150 and the host 110 is an ISO 7816 interface 102, and the second communication interface between the storage system 150 and the host 110 is a Universal Serial Bus (USB) interface 104. In another embodiment, there is one communication interface 104 between the storage system and the host. In this embodiment, the communication interface is a USB interface, and the storage system 150 and the host 110 may exchange commands and data using the USB mass storage class (MSC), USB Ethernet Emulation Model (EEM), or USB integrated circuit card device (ICCD) protocols, or any combination thereof.

In one embodiment, a host 110 includes a plurality of host applications 130, a host agent 120, and a host operating system 140 running on a processor in host 110. The host operating system 140 includes a host file system 144. The embedded applications 152 may write and read data in the memory 170 by sending a file-level request, such as a function call, to the host file system 144. The host file system 144 receives file-level requests from a host application 130 to write or read data in the memory 170 in the storage system 150, and generates logical block address (LBA) commands transmitted to the memory controller 180 over the USB communication interface 104. The memory controller 180 may receive the logical block address command, perform logical block address to physical address translation, and perform a read or write access to the memory 170 utilizing the physical address and the received command.

The host agent 120 may communicate with the storage system 150 by transmitting and receiving commands and data through an ISO 7816 application programming interface 142, which in turn, communicates with the embedded operating system 160 of the storage system 150 through an ISO 7816 interface 102. The mass storage manager 162 may also transmit commands and data to the host agent 120. In one embodiment, the mass storage manager 162 utilizes the ISO 7816 interface 102 to communicate with the host 110, and specifically, the host agent 120. In another embodiment, the mass storage manager 162 and the embedded operating system 160 may communicate with the host agent 120 over a USB interface 104. In this embodiment, commands and data may be exchanged using the USB mass storage class (MSC), USB Ethernet Emulation Model (EEM), or USB integrated circuit card device (ICCD) protocols, or any combination thereof.

In this architecture, the host file system 144 and the embedded file system 164 may each read and write data to the memory 170 in the storage system 170. For example, the host file system 144 may write and read its own data, and the embedded file system 164 may also write and read its own data. The memory 170 may also store shared data that may be accessed by both the host file system 144 and the embedded file system 164. For example, the host file system 144 may write data that is readable by the embedded file system 164, and the embedded file system 164 may also overwrite and modify that data. Similarly, the embedded file system 164 may write data that is readable by the host file system 144, and the host file system 144 may also overwrite and modify the data.

While sharing data in the memory 170 may be advantageous to host applications 130 and embedded applications 152 running in the system 100, operating a host file system 144 in parallel with an embedded file system 164 presents synchronization issues that must be addressed in order to ensure correct operation of the system 100. Specifically, the two cached copies 146, 166, of the storage system index 172 used by the host file system 144 and the embedded file system 164, respectively, may not always accurately reflect the contents of the storage system 150. If the cached storage system indexes 146, 166 are not kept up to date, a write operation utilizing obsolete information from a cached storage system index may corrupt the contents of the memory 170 in the storage system 150.

The storage system index (SSI) 172 acts as an index for the data stored in the storage system 150. Additionally, the storage system index 172 may also include directory information, file sizes, file creation and update dates, file and directory names, and file and directory attributes, and other information required to operate and maintain a storage system 150. The storage system index 172 information is utilized to map file-level read or write operations to logical block address read or write operations. When data is written to the memory 170 in the storage system 150, the storage system index 172 may updated with the location of the new data. Writing a new file, erasing a file, appending data to an existing file, or overwriting an existing file with a new, larger file, are all examples of file write operations that will require an update to the storage system index 172. These operations may be referred to as "Hard SSI operations." In contrast, the storage system index 172 does not require updating after a read operation, because the location of the stored data is unchanged. Similarly, if a storage system supports overwriting data with new data, sometimes referred to as a "write in place", the storage system index 172 will not require an update if a file is overwritten with a file of the same size, because the location of the stored data is unchanged. These operations may be referred to as "Soft SSI operations."

In order to improve the performance of the system 100, a file system may store a cached copy of the storage system index 172. When a file system performs a write operation, the cached copy is updated. The actual storage system index 172 may not be updated every time the cached storage system index is updated, in order to improve performance. Rather, the storage system index 172 may be updated after two or more write operations have been completed. When a system contains only one cached copy of a storage system index 172, maintaining a cached copy is an efficient means of improving system performance.

In contrast, the system 100 contains two cached copies 146, 166 of a storage system index 172. One cached storage system index 146 is utilized by the host file system 144, and the embedded cached storage system index 166 is utilized by the embedded file system 164. If a write operation using the host file system 144 requires its cached storage system index 146 to be updated, the embedded cached storage system index 166 is obsolete. If embedded cached storage system index 166 is not updated, a subsequent write operation using the embedded file system 164 will corrupt the contents of the storage system 150. Similarly, if a write operation using the embedded file system 164 requires its cached storage system index 166 to be updated, the host cached storage system index 146 is obsolete. If the host cached storage system index 146 is not updated, a subsequent write operation using the host file system will corrupt the contents of the storage system 150.

Synchronization of the host cached storage system index 146 and the embedded cached storage system index 166 is important to prevent corruption the storage system 150. The host file system cached storage system index 146 may not be directly accessible to a host application 130 or the host processor, which may prevent synchronization by direct copying of storage system index information between the host file system cached storage system index 146 and the embedded cached storage system index 166. Synchronizing the cached storage system indexes by copying the data to and from the storage system index 172 is inefficient. For example, updating the embedded cached storage system index 166 by first copying the host file system cached storage system index 146 to the storage system index 172, then copying the storage system index 172 to the embedded cached storage system index 166, is time-consuming. If this synchronization process is performed once per write access to the storage system, the data bandwidth of the storage system 150 may be greatly reduced.

In one embodiment, the need for synchronization operations may be reduced by utilizing the host file system 144 to perform certain file operations (such as writing a new file, appending data to an existing file, or overwriting an existing file with a new, larger file) for the embedded file system 164. The embedded file system 164 does not perform file operations that may require a change the embedded cached storage system index 166. Rather, the mass storage manager 162 receives these requests from the embedded application 152, and determines that processing the request would require a change the embedded cached storage system index 166. The mass storage manager 162 then transmits the request, including commands and associated data, to the host agent 120 in the host 110. In one embodiment, the request is transmitted over the ISO 7816 communications interface 102. The host agent 120 receives the request, and transmits the request, perhaps in the form of a file-level function call, to the host file system 144. The host file system 144 processes the request as if the request originated within the host 110, such as from a host application 130. The host file system 144 receives the file-level request, and generates one or more logical block address (LBA) commands to transmit to the memory controller 180 over the USB communication interface 104. The memory controller 180 accesses the memory 170 according to the logical block address commands.

The mass storage manager 162 can also determine that processing the request from the embedded application 152 would not require a change the embedded cached storage system index 166. This may occur if the request is a read operation, or a write operation which does not change the size or location of a file, such as a "write in place" operation. In this case, the mass storage manager 162 may then generate a file-level request of the embedded file system 164. The embedded file system 164 may accept the file-level command, and generate logical block address (LBA) commands used by the memory controller 180 to access the memory 170.

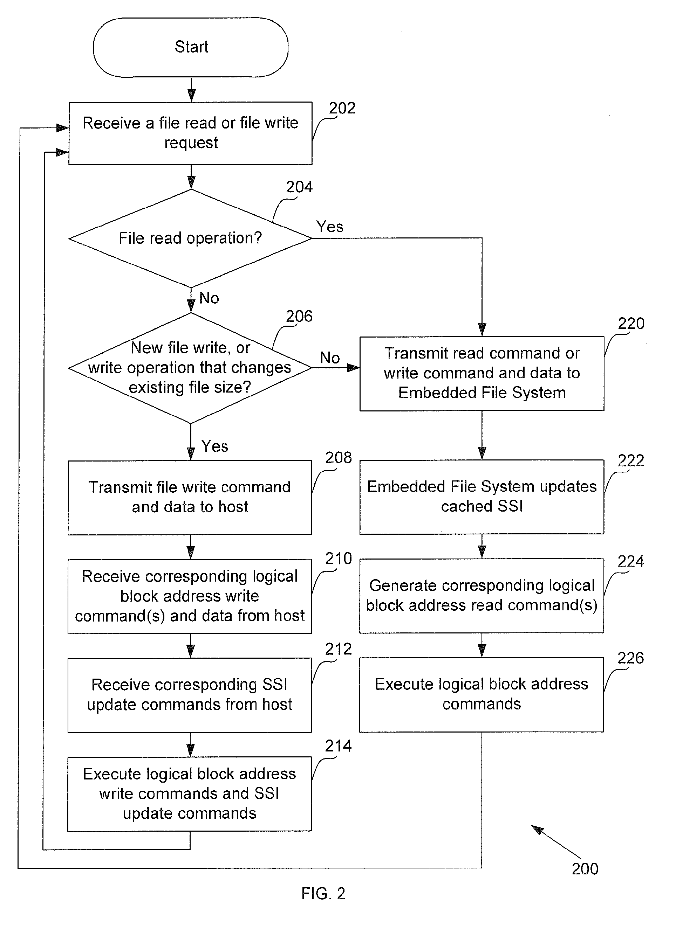

Figure 2 shows exemplary steps 200 for processing a write request received by the mass storage manager 162 of Figure 1. Control begins at step 202, where the mass storage manager 162 receives a read or write request from an embedded application 152 in communication with the operating system 160. At step 204, the request is evaluated in order to determine if it is a file read operation.

If the request is a file read operation, then the request and data will follow the "Soft SSI Operation" data path 192 shown in Figure 1. The read operation may be processed by the embedded file system 164 because the operation should not trigger or require a change to the embedded cached storage system index 164. Control passes from step 204 to step 222, where the storage system index 172 is updated with information from the host cached storage system index 146. In order to complete this update, the mass storage manager 162 transmits a request to the host 110 to copy information from the host cached storage system index 146 to the storage system index 172. The copying operation may be referred to as "flushing" the cached information to the storage system index 172 in the storage system 150. The request may be transmitted to the host over the ISO 7816 communication interface 102, and received by the ISO interface 142, and passed to the host agent 120. The host agent 120 then issues a command to the host file system 110 to copy information from the host cached storage system index 146 to the storage system index 172. Once the storage system index 172 is updated with information from the host cached storage system index 146, control passes to step 222, where the embedded cached storage system index 166 may be updated with the information from the storage system index 172. Effectively, the combination of steps 220 and 222 causes the embedded file system's cached storage system index 166 to become synchronized with the host file system's cached storage system index 146.

Control passes from step 222 to step 224, where the mass storage manager 162 reads the data from the memory 170 by issuing a read command to the embedded file system 164. In one embodiment, the command and data are arguments to a called function supported by the API of the embedded file system 164. In step 226, the embedded file system 164 may utilize the file-level read command to generate logical block address (LBA) commands, which are transmitted to the memory controller 180. In step 228, the memory controller 180 uses the LBA commands to read the memory 170, and the read data is returned to the application 152 through the embedded file system 164 and the mass storage manager 162. Control then returns to step 202, where the steps 200 wait for another write or read request.

If the request is not a file read operation, then the request is a file write operation. Control passes from step 204 to step 206, where the request is evaluated again to determine if the write request is to write a new file, to append data to an existing file, or to overwrite an existing file with a file of a different size. If not, then the write operation may be processed by the embedded file system 164, because the operation should not trigger or require a change to the embedded cached storage system index 164. Thus, the request and data will follow the "Soft SSI Operation" data path shown in Figure 1. Control passes to step 220, then to step 222, where the embedded cached storage system index is updated as described above.

Control passes from step 222 to step 224, where the mass storage manager 162 writes the data from the memory 170 by issuing a write command to the embedded file system 164. In one embodiment, the command and data are arguments to a called function supported by the API of the embedded file system 164. In step 226, the embedded file system 164 may utilize the file-level write command to generate logical block address (LBA) commands, which are transmitted along with the data to the memory controller 180. In step 228, the memory controller 180 uses the LBA commands and data to write the memory 170. Control then returns to step 202, where the steps 200 wait for another write or read request.

Returning to step 206, if the write request is to write a new file, to append data to an existing file, or to overwrite an existing file with a file of a different size, then the operation may be processed by the host file system 144, because the operation would trigger or require a change to the embedded cached storage system index 164 if performed with the embedded file system 164. Thus, the request and data will follow the "Hard SSI Operation" data path 190 shown in Figure 1.

In order to complete this update, in step 208, the mass storage manager 162 transmits a request to the host 110 to perform a write to the memory 170 using the host file system 144. The request includes the write command, and the corresponding data. The request may be transmitted to the host over the ISO 7816 communication interface 102, and received by the ISO interface 142, and passed to the host agent 120. The host agent 120 then issues a command to the host file system 110 to write the data to the memory 170.

The host file system 144 processes the request as if the request originated within the host 110, such as from a host application 130. The host file system 144 receives the file-level request, and generates one or more logical block address (LBA) commands and data to transmit to the memory controller 180 over the USB communication interface 104. In step 210, the memory controller 180 receives the commands from the host. In step 212, the memory controller 180 writes the memory 170 according to the logical block address commands.

The host file system 144 should update its cached storage system index 146 as a result of the write request from the host agent 120. The host may flush the host cached storage system index 146 to the storage system 150, in order to update the storage system index 172. If so, in step 214, the memory controller 180 may receive and execute one or more commands to update the storage system index 172, where the commands include updated information from the host cached storage system index 146. Control then returns to step 202, where the steps 200 wait for another write or read request.

While not shown in the exemplary steps 200, a file is open or will be opened before it is accessed with a read or write command. For example, before the file write command is transmitted to the host in step 208, a file open command may be transmitted to the host, if the file is not already opened. Similarly, the embedded file system may be utilized to open the file before the read or write operation in step 224 is performed. A file may also be closed by the appropriate file system at the completion of a read or write operation, before control returns to step 202. Alternatively, a file may be left open if the mass storage manager 162 determines that additional read or write operations are pending.

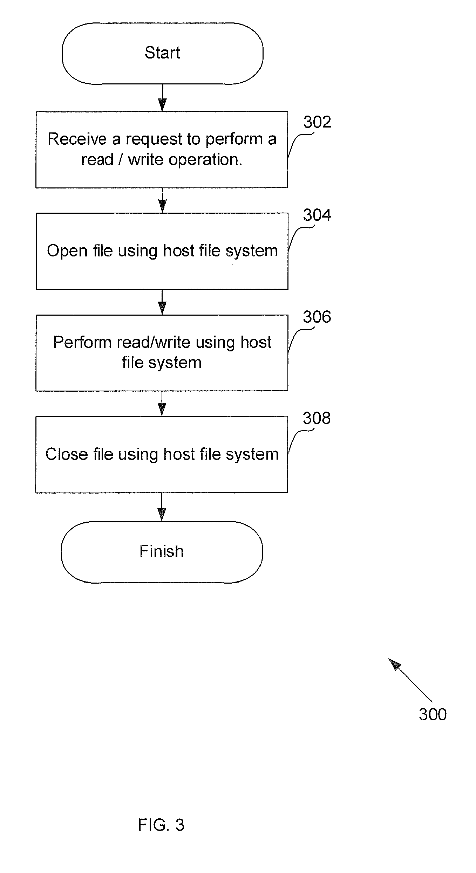

Figure 3 shows exemplary steps 300 for processing a write operation using the host file system 144 of Figure 1. The steps 300 may be utilized by a host application 130. The steps 300 may also be utilized by the host agent 120, for example, in responding to a write request transmitted from the mass storage manager 162.

In step 302, a request to perform a write or read operation is received. The request may be generated by functionality within an application 130, and received by a component within the application 130. The request may also be received by the host agent 120 from the mass storage manager 162 in the storage system 150. Control passes to step 304, where the file is opened by the host file system. In step 306, the host file system writes data to or reads data from the file. The host file system 144 receives the file-level request from the application 130 or the host agent 120, and generates one or more logical block address (LBA) commands and data to transmit to the memory controller 180 over the USB communication interface 104. The memory controller 180 receives the commands from the host 110. If the request is a write operation, the memory controller 180 also receives data. The memory controller 180 then writes or reads the memory 170 according to the logical block address commands. If the request is a read operation, the memory controller 180 returns data to the host over the USB communication interface 104. Control then passes to step 308, where the file is closed by the host file system.

Thus, inspection of the steps 300 reveals that the host cached file system storage system index 146 should not need to be synchronized with the embedded cached storage system index 166. The host file system 110 can utilize its cached storage system index 146 without risk of it being obsolete, because the embedded file system 164 does not perform any file I/O operations that could obsolete the host's cached copy 146 of the storage system index 172. Rather, the mass storage manager 162 delegates all write requests that would trigger or require an update to a cached storage system index 166 to the host file system 100. This eliminates the need for synchronization when write and read operations are performed using only the host file system 110, improving the performance of these operations.

In order to implement the steps 200 of Figure 2 and the steps 300 in Figure 3, a host file system must have a minimum required functionality. Specifically, a host agent or application must be able to command the host file system to 1) open or create a file, 2) close a file, 3) write a file, 4) read a file, and 5) copy the host cached storage system index and associated file information to a storage system storage system index.

The Win32 API is capable of implementing all of the required functions. The host file system can open or create a file using the CreateFile function:

HANDLE WINAPI CreateFile( _in LPCTSTR lpFileName, _in DWORD dwDesiredAccess, _in DWORD dwShareMode, _in_opt LPSECURITY_ATTRIBUTES IpSecurityAttributes, _in DWORD dwCreationDisposition, _in DWORD dwFlagsAndAttributes, _in_opt HANDLE hTemplateFile );

The host file system can close a file using the CloseHandle function:

BOOL WINAPI CloseHandle(_in HANDLE hObject );

The host file system can write a file using the WriteFile function:

BOOL WINAPI WriteFile(_in HANDLE hFile, _in LPCVOID, lpBuffer, _in DWORD nNumberOfBytesToWrite, _out_opt LPDWORD lpNumberOfBytesWritten, _inout_opt LPOVERLAPPED lpOverlapped);

The host file system can read a file using the ReadFile function:

BOOL WINAPI ReadFile(_in HANDLE hFile, _out LPVOID lpBuffer, _in DWORD nNumberOfBytesToRead, _out_opt LPDWORD lpNumberOfBytesRead, _inout_opt LPOVERLAPPED lpOverlapped);

All of the information associated with a file, including the file size directory information, may be copied from the host cached storage system index 146 to the storage system index 172 in the storage system 150 by calling the FlushFileBuffers function, then closing the file using the CloseHandle function:

BOOL WINAPI FlushFileBuffers(_in HANDLE hFile);

BOOL WINAPI CloseHandle(_in HANDLE hObject );

The API of other host file systems typically provides functionality equivalent to the functions shown for the Win32 API. Thus, the steps 200 in Figure 2 and the steps 300 in Figure 3 may be implemented with a variety of host file systems and operating system environments. Further, the steps 200 and the steps 300 may be implemented in hardware, software, or a combination of hardware and software.

Thus, in one embodiment, the need for synchronization between a host file system and an embedded file system may be reduced by utilizing the host file system 144 to perform certain write operations on behalf of the embedded file system 164. Specifically, if the mass storage manager 162 receives a request from an embedded application 152 for a write operation that writes a new file, appends data to an existing file, or overwrites an existing file with a file of a different size, then the request, including the data to write, is transmitted to the host 110, where it is processed by the host file system 144 as if the request originated in the host 110. By utilizing the host 110 to perform all write operations that would trigger an update to a cached storage system index 146, the host file system may perform file I/O operations without the risk that its cached storage system index 146 was previously rendered obsolete by an operation performed by the embedded file system 164. Thus, the need for synchronization is reduced. The embedded cached storage system index 166 may be updated from the storage system index 172 before data is written to or read from the memory 170 using the embedded file system 164. However, inspection of steps 200 reveals that this synchronization operation occurs only once per read or write request using the embedded file system 164. Further, if more data is written or read for each application 152 request, the relative overhead associated with this synchronization operation may be reduced.

In this embodiment, the steps 200 to process the application 152 requests and route the requests and data to the host file system 144 or to the embedded file system 164 for processing are relatively simple. Thus, the hardware or software requirements for the mass storage manager 162 to implement the steps 200 may be comparatively smaller than other embodiments. However, in this embodiment, if the mass storage manager 162 routes a write request to the host file system, the corresponding write request data is transmitted from the storage system 150 to the host 110 over an ISO 7816 communication interface 102, then from the host 100 to the storage system 150 over a USB communication interface 104, before it is written to the memory. Further, the data may be vulnerable to inspection and copying while being transmitted between the host 110 and the storage system 150.

In one embodiment, data transmission is protected between the host 110 and the storage system 150 by establishing a secure channel for transmission of data on one or both communication interfaces 102, 104. A secure channel is established through a key exchange between the host 110 and the storage system 150. The host 110 and the storage system 150 exchange or make available to each other public key values. The host 110 and the storage system 150 each use the received key to compute a private key, using an agreed-upon algorithm. The host 110 and the storage system 150 use the calculated private keys to encrypt data before transmitting it over the data communication channel, and decrypt data after receiving it over the data communication channel. The secure channel may be formed for a single communication session, and a new secure channel may be established for each session required. Any number of methods may be utilized to establish a secure channel to avoid the interception and tampering of data exchanged between the host 110 and the storage system 150. However, one or more of these methods may require additional hardware or software, and may impact the performance of the system 100.

Other embodiments may eliminate the need to transmit embedded application 152 write data to and from the host 110 in order to complete certain write operations, at the possible cost of a more complex hardware or software implementation of the mass storage manager 162. In one embodiment, the need for synchronization operations for two file systems may also be reduced. However, instead of routing the entire write request and associated data to and from the host 110, the mass storage manager 162 may utilize the host file system 144 to allocate file space for a write operation instead of actually performing the entire write operation on behalf of the embedded file system 164. Once the required file space is allocated by the host file system 144, the embedded file system 164 may perform the write operation itself. As detailed below, the mass storage manager 162 implementation in this embodiment is more complex, but transmitting the write data to and from the host 110 for certain write operations is avoided.

In this embodiment, the need for synchronization operations may be reduced by utilizing the host file system 144 to perform certain file operations (such as extending a file or creating a new, empty file) for the embedded file system 164. The embedded file system 164 does not perform file operations that may require a change the embedded cached storage system index 166, such as allocating new space or additional space for a file.

Rather, the embedded file system 164 relies on the host file system 144 to perform these operations on its behalf. Once the host file system 144 allocates the required file space, the embedded file system 164 may perform a write to the allocated file space, an operation which does not trigger or require a change the embedded cached storage system index 166. Thus, the host file system cached storage system index 146, and the storage system index 172, may not become obsolete because of file I/O operations of the embedded file system 164. This may reduce or eliminate the need to update the host file system cached storage system index 146 before a file I/O operation using the host file system 144.

The embedded cached storage system index 166 must be updated after the host file system 144 creates or extends a file for the embedded file system 164. However, by utilizing the host file system 144 to extend a file by a predetermined amount, the embedded file system 164 may perform one or more write operations to a file before the file needs to be extended again, thus reducing the number of synchronization operations required.

The mass storage manager 162 will receive file I/O requests from the embedded application 162, and may determine whether the file I/O operation will require an update to the storage system index 172. If an update is required, the mass storage manager 162 will process the request with the aid of the host 110 and the host file system 144. If an update is not required, the mass storage manager 162 will process the request through the embedded file system 164, and the host file system 144 will not be utilized.

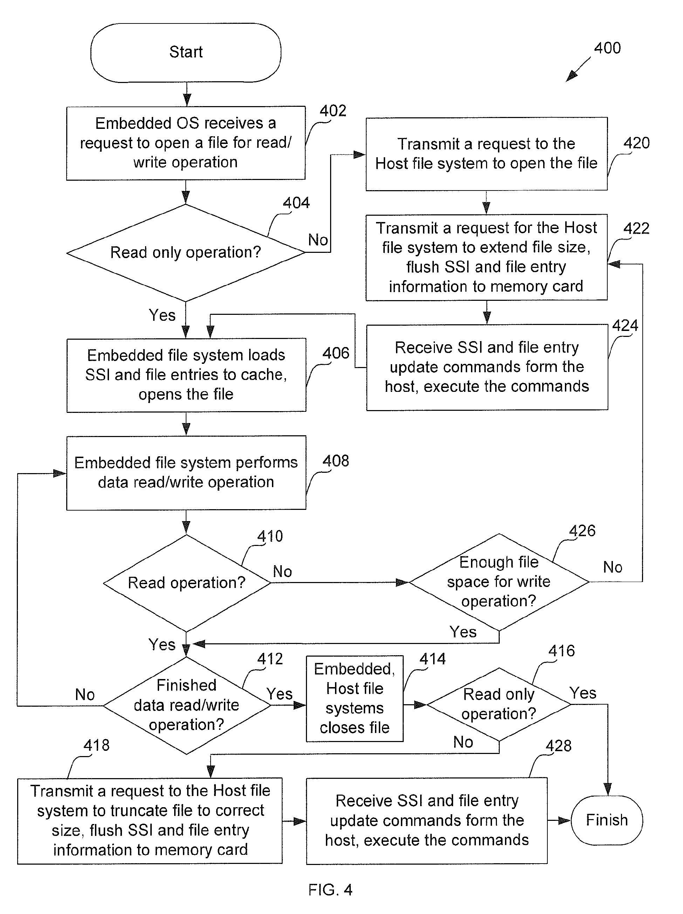

Figure 4 shows exemplary steps 400 for using an embedded file system 164 to perform read and write operations with assistance from a host file system. Control begins at step 402, where the mass storage manager 162 receives a request from the application 152 to open a file for a read or write operation. A file may be accessed for three reasons: 1) a read-only operation 2) a write-only operation or 3) a combination of writes and reads to one file. Thus, at step 404, the type of access request is evaluated.

If the request is for a read-only operation, control passes to step 406, where the embedded file system 164 updates its cache of the storage system index 166, including directory information, from the storage system index 172 of the storage system 150. In this step, it is assumed that the storage system index 172 contains the up-to-date index of the contents of the storage system 150. If the host cached storage system index 146 contains the most current index, then information from the host cached storage system index 146 must be used to update the storage system index 172, before the update of the embedded cached of the storage system index 166 takes place. When the update is complete, control passes to step 408, where the embedded file system 164 performs the data read operation from the storage system 150. Because the operation is a data read operation, control passes to step 410 and then to step 412, where the mass storage manager 162 determines whether the data read operation is finished. If the mass storage manager 162 has received an additional request to read more data from the same file, control passes back to step 408 to perform an additional read utilizing the embedded file system. Returning control to step 408 avoids the overhead associated with opening and closing a file a second time for the additional read operation from the same file. If the read operation is finished and there are no pending requests to read more data from the file, then control passes from 412, to step 414 where the file is closed by the embedded file system 162, then through step 416, and finally to the completion of the steps 400.

If the request at step 402 is for a write operation, or a combination of read and write operations, control passes to from step 404 to step 420, where the mass storage manager 162 directs the host file system 144 to open the file, or create a new file if the file does not exist in the storage system 150. This is accomplished by the mass storage manager 162 sending a request to the host agent 120 through the ISO 7816 communication interface 102. The host agent 120 then directs the host file system 144 to open the file.

Control passes to step 422, where the host file system 144 extends the size of the opened file. This is accomplished by the mass storage manager 162 sending a request to the host agent 120 through the ISO 7816 communication interface 102. The size of the extension can be a fixed number of bytes, such as one megabyte, that may accommodate one or more write operations. Alternatively, the file size may be extended by the number of bytes necessary to accommodate the file after one write operation is complete or after all write operations are complete. In this case, the size of the extension is the difference in size between the existing and new (or modified) file after one or all write operations. For example, if an existing file is two megabytes, and the received request is to write a file of four megabytes, then the size of the extension is two megabytes.

The extension of the file in step 420 triggers the host cached storage system index 146 to be updated with information about the extended file, including its storage location and its new size. The host file system 144 is instructed to flush or copy the updated information from host cached storage system index 146 to the storage system index 172 in the storage system 150. This is accomplished by the mass storage manager 162 sending a request to the host agent 120 through the ISO 7816 communication interface 102.

In response to the requests to flush or copy the updated information from host cached storage system index 146 to the storage system index 172 in the storage system, the host file system 144 may transmit commands and data to the memory controller 180 through the USB communication interface 104. In step 424, the memory controller receives the commands and data, and updates the storage system index 172 using the commands and data.

Control passes to step 406, where the embedded file system 164 updates its cache of the storage system index 166, including directory information, from the storage system index 172 of the storage system 150. After this step, the embedded cache of the storage system index 166 contains updated information about the file resized in step 422. The embedded file system 164 then opens the file, and in step 408, the embedded file system 164 performs the data read or write operation to the file. The data read or write operation in 408 does not trigger an update to the embedded cached storage system index 166, because the operation does not increase the size of the file. If enough space is not available, the write fails, and the file will be extended again in step 422 before the write is attempted again. Therefore, the host cached storage system index 146 is not made obsolete by a write operation using the embedded file system 164 in step 408.

If the operation completed is a write operation, then control passes from step 410 to step 426, where the algorithm checks if sufficient file space was allocated for the write operation. If not, then control passes to step 422, where the host file system 144 is used to extend the file again. At step 424, updated storage system index information, including directory information, from the host cache of the storage system index 146 is received from the host 110, and is used to update the storage system index 172 of the storage system 150. This information is then used to update the embedded cache of the storage system index 166. Control then passes to steps 406, followed by 408, where the embedded file system 164 updates the embedded cache of the storage system index 166 and attempts to complete the write operation.

If there was sufficient file space for the write operation, control passes to step 412, where the mass storage manager 162 determines whether the data read/write operation is finished. If the mass storage manager 162 has received an additional request to write data to or read data from the same file, control passes back to 408 to perform an additional read/write operation utilizing the embedded file system 164. Returning control to step 408 avoids the overhead associated with opening and closing a file a second time for the additional read operation from or write operation to the same file. If the last operation is finished and there are no pending read or write requests for the same the file, then control passes from 412, through step 414, where the file is closed by the embedded file system. Control them passes to step 416, and then to step 418, because the request received at step 402 was not a read-only file request. At step 418, the host file system truncates the file to eliminate any extra space that was allocated to the file when the file was extended in step 422, but that remained unused after the write operation in step 408. This is accomplished by the mass storage manager 162 sending a request to the host agent 120 through the ISO 7816 communication interface 102.

The truncation of the file in step 418 triggers or requires the host cached storage system index 146 to be updated with information about the truncated file, including its storage location and its new size. The host file system 144 is instructed to flush or copy the updated information from host cached storage system index 146 to the storage system index 172 in the storage system. This is accomplished by the mass storage manager 162 sending a request to the host agent 120 through the ISO 7816 communication interface 102.

In response to the requests to flush or copy the updated information from host cached storage system index 146 to the storage system index 172 in the storage system, the host file system 144 may transmit commands and data to the memory controller 180 through the USB communication interface 104. In step 428, the memory controller receives the commands and data, and updates the storage system index 172 using the commands and data. After this update, the steps 400 are finished.

Other embodiments of the file extension algorithm are possible. In one embodiment, the extension of the file in step 422 utilizes information about the file size that will result once the pending write operation is complete, and extends the file so that there is always at least sufficient file space to complete the pending file write operation. In this embodiment, control passes from step 408 to step 412, then to step 426 if there is a subsequent pending file access request. If there is another pending file access request, in step 426, the file may be extended again if the pending request is a file write request and if there is not at least sufficient file space to complete the next file write operation.

Utilizing the steps 400 in Figure 4, a mass storage manager 162 may receive a request to write a file, where the operation requires the use of the embedded file system 164. In response to this request, the mass storage manager 162 may utilize the host file system 144 to extend the file before the write, and truncate the file to the correct size after the write. The mass storage manager 162 may utilize the embedded file system 164 to actually transfer the data to the memory 170. Therefore, unlike the first embodiment, the write data is not transmitted to and from the host 110 before storage in the memory 170.

By dividing the tasks associated with the application request, the mass storage manager 162 may ensure that the host file system 144 performs all of the operations that would require an update to the storage system index 172. Therefore, the host cached storage system index 146 is not at risk of becoming obsolete because of a file I/O operation utilizing the embedded file system 164. The embedded cached storage system index 166 may be updated from the storage system index 172 before data is written to or read from the storage system 150. However, inspection of steps 400 reveals that this synchronization operation occurs only once when a read-only operation is requested, and only once per file extension event when a write operation is requested. Further, if the predetermined file extension size increased, the number of required of file extension events may be decreased.

In order to implement the steps 400 of Figure 4, a host file system must have a minimum required functionality. Specifically, the mass storage manager 162 must be able to direct the host file system to 1) open or create a file, 2) close a file, 3) extend a file, 4) truncate a file, and 5) copy the host cached storage system index and associated file information to a storage system storage system index. As already discussed, the mass storage manager 162 may transmit commands to the host agent 120, which in turn may send commands, perhaps in the form of function calls, to the host file system 144.

The Win32 API is capable of implementing all of the required functions. As discussed above, the host file system can open or create a file, close a file, and copy the host cached storage system index and associated file information to a storage system storage system index. The host file system also can extend or truncate a file by first setting a file pointer associated with an opened file using the SetFilePointer function, then setting the location pointed to by the file pointer as the end of the opened file using the SetEndOfFile function.

DWORD WINAPI SetFilePointer(_in HANDLE hFile, _in LONG IDistanceToMove, _inout_opt PLONG lpDistanceToMoveHigh,_in DWORD dwMoveMethod);

BOOL WINAPI SetEndOfFile(_in HANDLE hFile);

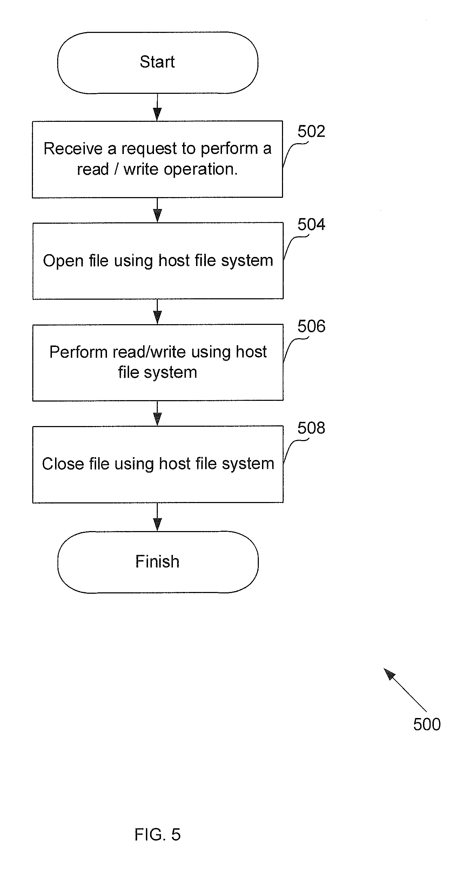

Figure 5 shows exemplary steps 500 for processing a write operation using the host file system 144 of Figure 1. The steps 500 may be utilized by a host application 130. The steps 500 may also be utilized by the host agent 120, for example, in responding to a write request transmitted from the mass storage manager 162.

In step 502, a request to perform a write or read operation is received. The request may be generated by functionality within an application 130, and received by a component within the application 130. The request may also be received by the host agent 120 from the mass storage manager 162 in the storage system 150. Both the host agent 120 and the application 130 may send commands and data to the host file system 144 through the host operating system 140. Control passes to step 504, where the file is opened by the host file system. In step 506, the host file system writes data to or reads data from the file. The host file system 144 receives the file-level request from the application 130 or the host agent 120, and generates one or more logical block address (LBA) commands and data to transmit to the memory controller 180 over the USB communication interface 104. The memory controller 180 receives the commands from the host 110. If the request is a write operation, the memory controller 180 also receives data. The memory controller 180 then writes or reads the memory 170 according to the logical block address commands. If the request is a read operation, the memory controller 180 returns data to the host over the USB communication interface 104. Control then passes to step 508, where the file is closed by the host file system.

Thus, inspection of the steps 500 reveals that the host cached file system storage system index 146 should not need to be synchronized with the embedded cached storage system index 166. The host file system 110 can utilize its cached storage system index 146 without risk of it being obsolete, because the embedded file system 164 does not perform any file I/O operations that could obsolete the host's cached copy 146 of the storage system index 172. Rather, the mass storage manager 162 delegates all operations, such as file extension and truncation, that would trigger or require an update to a cached storage system index 166 to the host file system 100. This eliminates the need for synchronization when write and read operations are performed using the host file system 110, improving the performance of these operations.

The methods and systems described herein may be implemented within a variety of storage architectures. One example of a memory shared between a host file system and an embedded file system is a high-capacity SIM card, such as the SIM 5000™, a memory device from SanDisk Corporation of Milpitas, California. SIM cards and R-UIM cards are utilized in cellular phones operating on Global System for Mobile communication (GSM) and Code Division Multiple Access (CDMA) networks, respectively. In these applications, SIM and R-UIM cards store limited amounts of information, such as encryption keys, subscriber identification values, and telephone contact lists. However, as the storage density of non-volatile memory has increased, more non-volatile memory may be contained within a storage card such as a SIM card. The additional storage may be utilized for a variety of advanced cellular telephone services, such as storing Multimedia Messaging Service (MMS) object attachments, MP3 audio files, high-resolution images files, and video files, as well as providing full personal information management (PIM) functionality, such as e-mail contact lists and calendars. Some of the additional storage capacity is utilized by applications running on the host, such as a cellular telephone, personal digital assistant (PDA), or any device in communication with the high-capacity SIM card. The additional storage capacity is also utilized by applications running on an embedded processor with the high-capacity SIM card. In a high-capacity SIM card, at least some data is stored in a shared memory space accessible by both the embedded processor within the SIM card, and the host.

Thus, in a system utilizing a high-capacity SIM card, there is a need to coordinate the access to the flash memory storage within a high-capacity SIM card by the host file system and the embedded file system. Utilizing the embodiments, a host processor may access the flash memory storage within a high-capacity SIM card without having to update its cached storage system index with the contents of the embedded cached storage system index. Thus, the performance of the host file system access is similar to systems where access is not shared with an embedded processor.

A mass storage manager, such as the mass storage manager 162 of Figure 1, may be utilized to receive requests from an embedded application 152, and determine if the requested operation would require an update to the storage system index 172. In one embodiment, the mass storage manager 162 routes the request to the host file system 144 if the request will change the storage system index 172, and routes the request to the embedded file system 164 if the request will change the storage system index 172. Thus, the host file system 144 is utilized for writing a new file, erasing a file, appending data to an existing file, or overwriting an existing file with a new, larger file. The embedded file system 164 is only utilized for read operations, and overwriting data with new data, sometimes referred to as a "write in place", operations. In this embodiment, if the host file system 144 is utilized to complete the request, the write data is transmitted out of the storage system 150 to the host 110 as part of a file level command. The write data is transmitted from the host 110 to the high-capacity SIM card 150 as part of a plurality of logical block address commands generated by the host file system 144. Thus, the write data exits and reenters the high-capacity SIM card 150 before being written to flash memory 170. In order for an embedded application to read from the flash memory storage, the embedded file system first updates its cache of the storage system index, then performs reads without assistance from the host file system, as described the steps 200 in Figure 2, and the steps 400 in Figure 4.

In another embodiment, the mass storage manager 162 partitions request from the application 152 as necessary, to utilize functionality of the host file system 144 if file extension and truncation are required, and otherwise use the embedded file system 164 for actual read and write operations. In order to write data to a new file, append an existing file, or write to an existing file where the size of the resulting file will change, an embedded file system 164 may rely on a host file system 144 to open or create a new file, extend the file in preparation for writing new data, and truncate and close the file after a write operation is complete. The embedded file system 164 may be utilized to perform the actual write of data to the file. The mass storage manager 162 coordinates the operation of the host file system 144 and the embedded file system 164 in order to complete the request.

Allowing a host file system 110 and an embedded file system 164 to share the same data storage space allows host applications 130 and embedded applications 152 to share the same data as needed. A potential inefficiency associated with operating two file systems in parallel is the synchronization of the cached storage system indexes stored within each file system, and the storage system index stored in the storage system itself. Without synchronization, a memory 170 may be corrupted by a write operation utilizing an obsolete cached copy of the storage system index. On the other hand, synchronization operations may decrease data throughput because of the need to copy storage system index information between the storage system 150 and the cached copy of the storage system index stored within each file system.

The embodiments allow the host file system to utilize its cached storage system index without risk of it being obsolete, because the embedded file system does not perform any file I/O operations that could obsolete the host's cached copy of the storage system index. This eliminates the need for synchronization when write and read operations are performed using the host file system, improving the performance of these operations. In order to do this, the host file system performs many operations on behalf of the embedded file system. Depending on the embodiment, operations that trigger or require a change in a storage system index, such as file writes, file creation, file deletion, file extension, and file truncation operations are performed by the host file system 144, on behalf of the embedded file system 164.

In one embodiment, the host file system 144 is used to perform all write operations to the memory 170, whether initiated by a host application 130 or an embedded application 152, which would trigger or require a change in the storage system index 172. Thus, the host file system 144 processes write requests from the embedded applications 152 through the host agent 120 as if the requests originated within the host. In doing so, the host cached storage system index 146 is not at risk of becoming obsolete by an operation by the embedded file system 164.

In another embodiment, the embedded file system 164 is utilized to write data to the memory 170 for the embedded application 152, and the host file system 144 is only used to extend the size of the file to allow new data to be written to the file. The host file system 144 also truncates the file to eliminate unused file space at the completion of a write operation. After the extension operation, the embedded file system 164 must synchronize its cached storage system index 166 with the host's cached storage system index 146. The overhead of this synchronization operation may be reduced (relative to the amount of data written) by selecting a file extension size sufficient to accommodate most or all of the data to be written by the embedded file system while the file is opened.

When the embedded file system 164 is utilized to read data, the embedded file system 164 must synchronize its cached storage system index 166 with the host's cached storage system index 146 before opening the file. The overhead of this synchronization operation may be reduced (relative to the amount of data read) by reading more data from the file each time it is opened.

In one embodiment, the host file system 144 is favored, and thus may have comparatively better performance, because the host file system's cached storage system index 146 may not become obsolete because of file I/O operations utilizing the embedded file system 164. In another embodiment, the embedded file system 164 could be favored instead of the host file system 144, by utilizing the embedded file system 164 to perform all of the operations that would modify the storage system index 172, and requiring the host file system 144 to synchronize its cached storage system index 146 before performing a file I/O operation. The choice of which file system to favor depends on the performance requirements of the system. For example, if the file I/O performance of data being stored by the host is more important, the host file system 144 could be favored. On the other hand, if the file I/O performance of data being stored by embedded applications 152 is more important, then the embedded file system 164 could be favored.

Although the invention has been described with respect to various system and method embodiments, it will be understood that the invention is entitled to protection within the full scope of the appended claims.

## Claims

1. A method of managing data access to a storage system accessible by an embedded file system and indexed by a storage system index, comprising:
receiving an access request from within the storage system, wherein the access request is associated with a file;
determining if the access request is a write request that requires an update to the storage system index;
if the access request is a write request that requires an update to the storage system index, wherein the write request comprises data:
transmitting a data write command and the data to a host;
receiving a logical block address write command and at least a portion of the data from the host;
writing the portion of the data to the storage system according to the logical block address write command;
receiving the storage system index update command from the host; and
updating the storage system index according to the received storage system index update command; and
if the access request is a write request that does not require an update to the storage system index, wherein the write request comprises data:
writing data to the file with the embedded file system.

2. The method of claim 1, further comprising:
determining if the access request is a read request, and, if so:
reading data from the file with the embedded file system.

3. The method of claim 1, wherein the storage system index comprises a File Allocation Table.

4. The method of claim 1, wherein the storage system is a removable media card comprising a non-volatile memory.

5. The method of claim 1, wherein determining if the access request is a write request that requires an update to the storage system index comprises determining whether the data write request is a request to write a new file to the storage system.

6. The method of claim 1, wherein determining if the access request is a write request that requires an update to the storage system index comprises determining whether the data write request is a request to replace an existing file with a new file, wherein the size of the new file is greater than the size of the existing file.

7. The method of claim 1, wherein determining if the access request is a write request that requires an update to the storage system index comprises determining whether the data write request is a request to append data to an existing file.

8. The method of claim 1, wherein the data write command and data to write is transmitted over a first interface, and the logical block address command and storage system index command are received over a second interface.

9. The method of claim 3, wherein the first interface is an ISO 7816 interface, and the second interface is a Universal Serial Bus interface.

10. The method of claim 8, wherein the first interface is a secure interface.

11. The method of claim 8, wherein the second interface is a secure interface.

12. The method of claim 1, wherein transmitting a data write command and the data to a host comprises:
transmitting an open file command to the host; and
transmitting a data write command and data to the host.

13. The method of claim 12, further comprising transmitting a command to a host to close the file.

14. The method of claim 1, wherein writing data to the file with the embedded file system comprises:
opening the file with an embedded file system;
writing data to the file with the embedded file system; and
closing the file with the embedded file system.

15. The method of claim 1, wherein reading data from the file with the embedded file system comprises:
opening the file with an embedded file system;
reading data from the file with the embedded file system; and
closing the file with the embedded file system.

16. A storage system indexed by a storage system index, comprising:
a memory;
an embedded file system;
a memory controller, configured to receive write and read requests from a host and the embedded file system and write data to and read data from the memory; and
a manager, configured to:
receive an access request from within the storage system, wherein the access request is associated with a file,
determine if the access request is a write request that requires an update to the storage system index, a write request that does not require an update to the storage system index, or a read request,
if the access request is a write request that requires an update to the storage system index, wherein the write request comprises data:
transmit a data write command and the data to a host, and
if the access request is a write request that does not require an update to the storage system index, wherein the write request comprises data:
write data to the file with the embedded file system.

17. The system of claim 16, wherein the manager is further configured to read data from the file with the embedded file system, if the access request is a read request.

18. The system of claim 16, wherein the storage system index comprises a File Allocation Table.

19. The system of claim 16, wherein the storage system is a removable media card comprising a non-volatile memory.

20. The system of claim 16, wherein determining if the access request is a write request that requires an update to the storage system index comprises determining whether the data write request is a request to write a new file to the storage system.

21. The system of claim 16, wherein determining if the access request is a write request that requires an update to the storage system index comprises determining whether the data write request is a request to replace an existing file with a new file, wherein the size of the new file is greater than the size of the existing file.

22. The system of claim 16, wherein determining if the access request is a write request that requires an update to the storage system index comprises determining whether the data write request is a request to append data to an existing file.

23. The system of claim 16, wherein the data write command and the data to write is transmitted over a first interface, and the logical block address command and storage system index command are received over a second interface.

24. The system of claim 23, wherein the first interface is an ISO 7816 interface, and the second interface is a Universal Serial Bus interface.

25. The system of claim 23, wherein the first interface is a secure interface.

26. The system of claim 23, wherein the second interface is a secure interface.

27. The system of claim 16, wherein transmitting a data write command and the data to a host comprises:
transmitting an open file command to the host; and
transmitting a data write command and data to the host.

28. The system of claim 27, wherein the manager is further configured to transmit a command to a host to close the file.

29. The system of claim 16, wherein writing data to the file with the embedded file system comprises:
opening the file with an embedded file system;
writing data to the file with the embedded file system; and
closing the file with the embedded file system.

30. The system of claim 16, wherein reading data from the file with the embedded file system comprises:
opening the file with an embedded file system;
reading data from the file with the embedded file system; and
closing the file with the embedded file system.

31. A method of managing data access to a storage system indexed by a storage system index, comprising:
receiving an access request from within the storage system, wherein the access request is associated with a file;
determining if the access request is a write request;
if the access request is a write request, wherein the write request comprises data:
transmitting an open file command to a host;
transmitting a file extend command to the host;
receiving a storage system index update command from the host, wherein the storage system index update command comprises information about the extended file;
updating the storage system index according to the received storage system index update command;
transmitting a close file command to the host;
open the file with the embedded file system,
writing data with an embedded file system; and
close the file with the embedded file system.

32. The method of claim 31, further comprising:
determining if the access request is a read request, and if so:
opening the file with an embedded file system;
reading data from the file with the embedded file system; and
closing the file with the embedded file system.

33. The method of claim 31, wherein the storage system index comprises a File Allocation Table.

34. The method of claim 31, wherein the storage system is a removable media card comprising a non-volatile memory.

35. The method of claim 31, wherein the file extend command extends the file by a predetermined number of bytes.

36. The method of claim 31, wherein the open file command, the close file command, and the file extend command are transmitted over a first interface, and the logical block address command and storage system index command are received over a second interface.

37. The method of claim 36, wherein the first interface is an ISO 7816 interface, and the second interface is a Universal Serial Bus interface.

38. The method of claim 36, wherein the first interface is a secure interface.

39. The method of claim 36, wherein the second interface is a secure interface.

40. A storage system indexed by a storage system index, comprising:
a memory;
an embedded file system;
a memory controller, configured to receive requests from a host and an embedded file system and write data to and read data from the memory;
a manager, configured to:
receive an access request from within the storage system,
wherein the access request is associated with a file;
determine if the access request is a write request, wherein the write request comprises data;
in response determining that the access request is a write request:
transmit an open file command to a host,
transmit a file extend command to the host,
transmit a storage system index cache flush command to the host,
open the file with the embedded file system,
write data with the embedded file system,
close the file with the embedded file system, and
transmit a close file command to the host, wherein the write of the data to the file with the embedded file system does not change a size of the file.

41. The system of claim 40, wherein the manager is further configured to determine that the access request is a read request, and if so:
open the file with the embedded file system;
read data from the file with the embedded file system; and
close the file with the embedded file system, in response.

42. The system of claim 40, wherein the manager is further configured to transmit an truncate file command to the host, wherein the truncate file command comprises a size value indicative of a number of bytes sufficient to store the file after the completed data write request.

43. The system of claim 42, wherein the manager is further configured to:
transmit a storage system index cache flush command to the host after the truncate file command is transmitted to the host;
receive a storage system index update command from the host, wherein the storage system index update command comprises information about the truncated file; and
update the storage system index according to the storage system index update command.
